Europäisches Patentamt

**European Patent Office**

Office européen des brevets

(11) Publication number: **0 054 789**
**B1**

(12) **EUROPEAN PATENT SPECIFICATION**

(45) Date of publication of patent specification: **07.11.84**

(21) Application number: **81110147.6**

(22) Date of filing: **04.12.81**

(51) Int. Cl.³: **G 21 C 7/32**

(54) Spectral shift controlled nuclear reactor.

(30) Priority: **16.12.80 US 217061**

(43) Date of publication of application:
**30.06.82 Bulletin 82/26**

(45) Publication of the grant of the patent:
**07.11.84 Bulletin 84/45**

(84) Designated Contracting States:
**AT BE CH DE LI SE**

(56) References cited:
**US-A-3 110 655**
**US-A-3 223 589**
**US-A-4 248 667**

(73) Proprietor: **WESTINGHOUSE ELECTRIC CORPORATION**
**Westinghouse Building Gateway Center**
**Pittsburgh Pennsylvania 15222 (US)**

(72) Inventor: **Carlson, William Ralph**
**2359 Hayson Avenue**
**Pittsburgh Pennsylvania (US)**
Inventor: **Piplica, Eugene Joseph**
**227 Meadowbrook Drive**
**Trafford Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

The invention relates to spectral shift reactor control and, more particularly to mechanical means for spectral shift reactor control.

In typical nuclear reactors, reactivity control is accomplished by varying the amount of neutron absorbing material (poisons) in the reactor core. Generally, neutron absorbing control rods are utilized to perform this function by varying the number and location of the control rods with respect to the reactor core. In addition to control rods, burnable poisons and poisons dissolved in the reactor coolant can be used to control reactivity.

In the conventional designs of pressurized water reactors, an excessive amount of reactivity is designed into the reactor core at start-up so that as the reactivity is depleted over the life of the core the excess reactivity may be employed to lengthen the core life. Since an excessive amount of reactivity is designed into the reactor core at the beginning of core life, neutron absorbing material such as soluble boron must be placed in the core at that time in order to properly control the excess reactivity. Over the core life, as reactivity is consumed, the neutron absorbing material is gradually removed from the reactor core. The neutron absorbing material used during core life absorbs neutrons and removes reactivity from the reactor core which could otherwise be used in a more productive manner such as in plutonium fuel production. The consumption of reactivity in this manner without producing a useful product results in a less efficient depletion of uranium and greater fuel costs than could otherwise be achieved.

One such method of producing an extended core life while reducing the amount of neutron absorbing material in a heavy water reactor core is by the use of "Spectral Shift Control". In that case, the reduction of excess reactivity (and thus neutron absorbing material) is achieved by withholding a large portion of the heavy reactor coolant water until after some time of reactor operation so that the neutron spectrum at the beginning of core life is relatively hard. The use of a "hard" spectrum results in more neutrons being consumed by $U^{238}$ in a useful manner rather than by poisons. As reactivity is consumed, the ordinary water is gradually replaced by heavy water so that the reactor core reactivity is maintained at a proper level. Thus, the reactor can be controlled without the need for neutron absorbing materials and without the use of excess reactivity at start-up which results in a significant uranium fuel cost savings. The additional plutonium production also reduces the $U^{235}$ enrichment requirements.

It is the principal object of the present invention to provide a nuclear reactor in which core life is extended while control requirements for load follow operations remain high.

With this object in view, the present invention resides in a spectral shift controlled pressurized water nuclear reactor including a reactor vessel having an inlet and an outlet for circulating a water coolant in heat transfer with a core disposed therein, a plurality of fuel assemblies disposed in said core for generating heat by nuclear fission, and a plurality of low neutron absorbing water displacer elements arranged to be inserted into, or withdrawn from, said fuel assemblies, characterized in that medium neutron absorbing water displacer elements having a greater reactivity worth than said low neutron absorbing water displacer elements but having a reactivity worth less than control rods are arranged in said reactor to be inserted into, or withdrawn from, certain of said fuel assemblies, said low neutron absorbing displacer elements and said medium neutron absorbing displacer elements being adapted to displace water from said core when said displacer elements are inserted into said fuel assemblies thereby reducing the volume of water in said core.

Since such low neutron absorbing displacer rods which may be of stainless steel have greater neutron absorbing capability, they can effect greater reactivity change per rod then than the pure water displacement rods. However, by arranging fewer stainless steel displacer rods in a cluster, the reactivity worth of the stainless steel displacer rod cluster is less than a low neutron absorbing displacer rod cluster.

The invention will become more readily apparent from the following description of a preferred embodiment thereof shown, by way of example only, in the accompanying drawings, wherein:

Figure 1 is a cross-sectional view in elevation of the reactor vessel;

Figure 2 is a cross-sectional view in elevation of the top portion of the fuel assembly;

Figure 3 is a cross-sectional view in elevation of the bottom portion of the fuel assembly;

Figure 4 is a view in perspective of displacer rods and their respective fuel assembly;

Figure 5 is a cross-sectional view in elevation of a displacer rod guide structure;

Figure 6 is a view along line VI—VI of Figure 5;

Figure 7 is a diagram of a quarter core of the reactor;

Figure 8 is an enlarged view of a portion of the quarter core;

Figure 9 is an enlarged view of a portion of the quarter core;

Figure 10 is cross-sectional diagram of a typical fuel assembly;

Figure 11 is a diagram of a section of the core;

Figure 12 is a diagram of a reactor load follow response; and

Figure 13 is a flow chart of rod cluster selection logic.

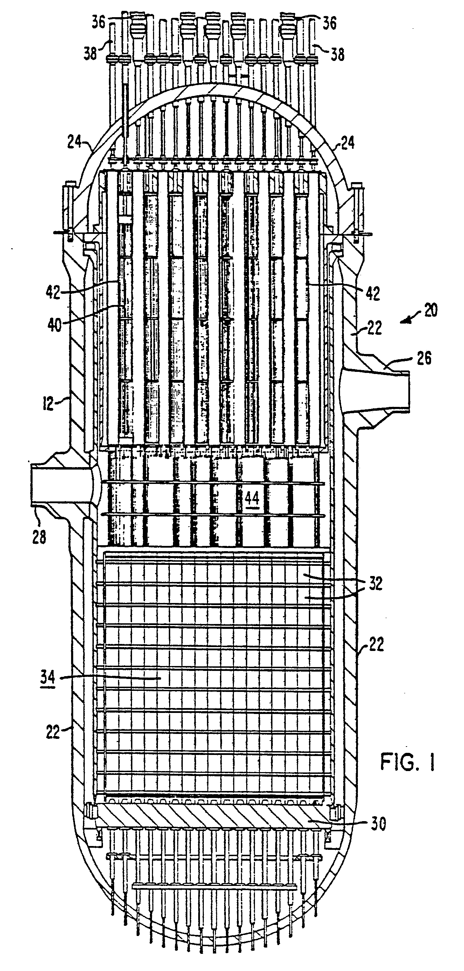

Referring to Figure 1, the nuclear reactor is referred to generally as 20 and comprises a reactor vessel 22 with a removable closure head 24 attached to the top end thereof. An inlet nozzle 26 and an outlet nozzle 28 are connected to reactor vessel 22 to allow a coolant such as water to circulate through reactor vessel 22. A core plate 30 is disposed in the lower portion of reactor vessel 22 and serves to support fuel assemblies 32. Fuel assemblies 32 are arranged in reactor vessel 22 and comprise reactor core 34. As is well understood in the art, fuel assemblies 32 generate heat by nuclear fissioning of the uranium therein. The reactor coolant flowing through reactor vessel 22 in heat transfer relationship with fuel assemblies 32 transfers the heat from fuel assemblies 32 to electrical generating equipment located remote from nuclear reactor 20. A plurality of control rod drive mechanisms 36 which may be chosen from those well known in the art are disposed on closure head 24 for inserting or withdrawing control rods (not shown) from fuel assemblies 32. In addition, a plurality of displacer rod drive mechanisms 38 are also disposed on closure head 24 for inserting or withdrawing displacer rods 40 from fuel assemblies 32. Displacer rod drive mechanism 38 may be similar to the one described in copending European Patent Application No. 81 110 146 (publication No. 54 788) entitled "Hydraulic Drive Mechanism". For purposes of clarity, only a selected number of displacer rods 40 are shown in Figure 1. However, it should be understood, that the number of displacer rods 40 are chosen to correspond to the number of displacer rod guide tubes in fuel assemblies 32. A plurality of displacer rod guide structures 42 are located in the upper section of reactor vessel 22 with each being in alignment with a displacer rod drive mechanism 38 for guiding the movement of displacer rods 40 through the upper section of reactor vessel 22. A calandria 44 may be arranged between fuel assemblies 32 and displacer rod guide structures 42 and comprises a multiplicity of hollow stainless steel tubes arranged in colinear alignment with each displacer rod and control rod for providing guidance of the displacer rods and control rods through the calandria area and for minimizing flow induced vibrations in the displacer rods and control rods.

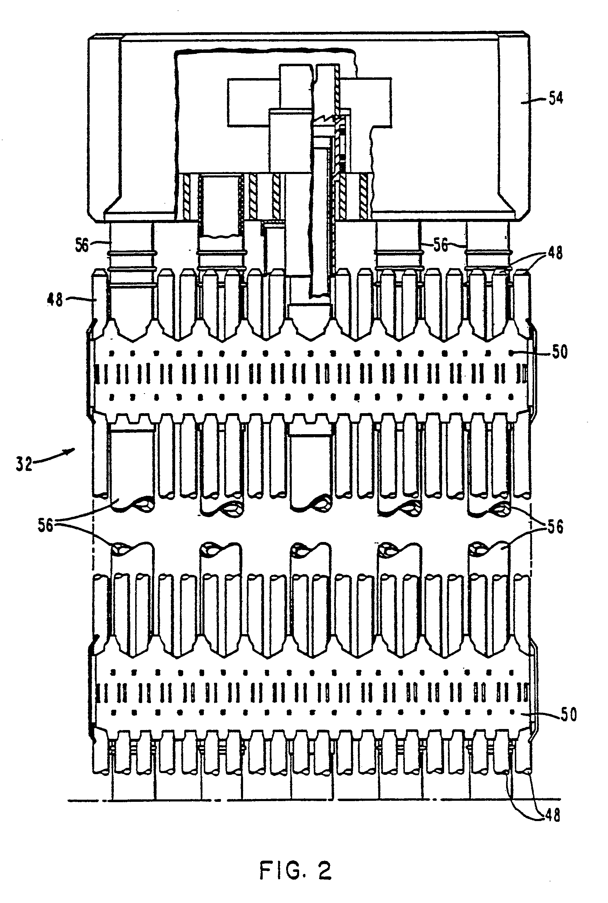

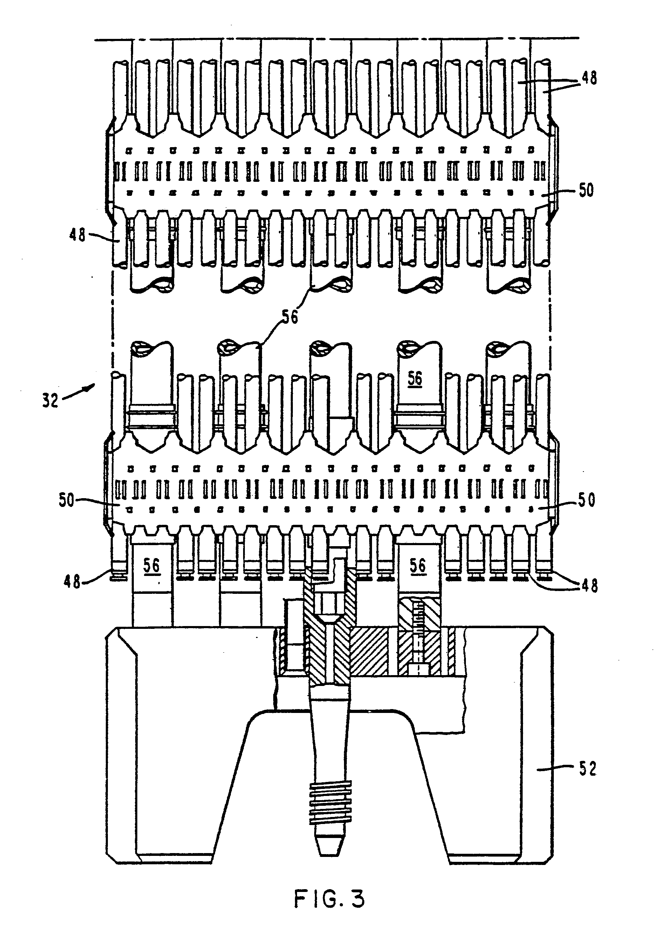

Referring now to Figures 2—4, fuel assemblies 32 comprise fuel elements 48, grids 50, bottom nozzle 52, top nozzle 54, and guide tubes 56. Fuel elements 48 may be elongated cylindrical metallic tubes containing nuclear fuel pellets and having both ends sealed by end plugs. Fuel elements 48 may be arranged in a substantially 20×20 rectangular array and are held in place by grids 50. Guide tubes 56 which may number 25 are arranged in a generally 5×5 array within each fuel assembly 32. Each guide tube 56 occupies the space of about four fuel elements 48 and extend from bottom nozzle 52 to top nozzle 54 and provide a means to support grids 50, top nozzle 54 and bottom nozzle 52. Guide tubes 56 may be hollow cylindrical metallic tubes manufactured from Zircaloy and capable of accommodating rods such as displacer rods 40 or control rods. Displacer rods 40 and control rods are manufactured to be approximately the same size so that each guide tube 56 can equally accommodate either a displacer rod or a control rod. When not occupied by a rod, guide tubes 56 are filled with reactor coolant, however, when displacer rods 40 are inserted in guide tubes 56 displacer rods 40 displace the coolant therein.

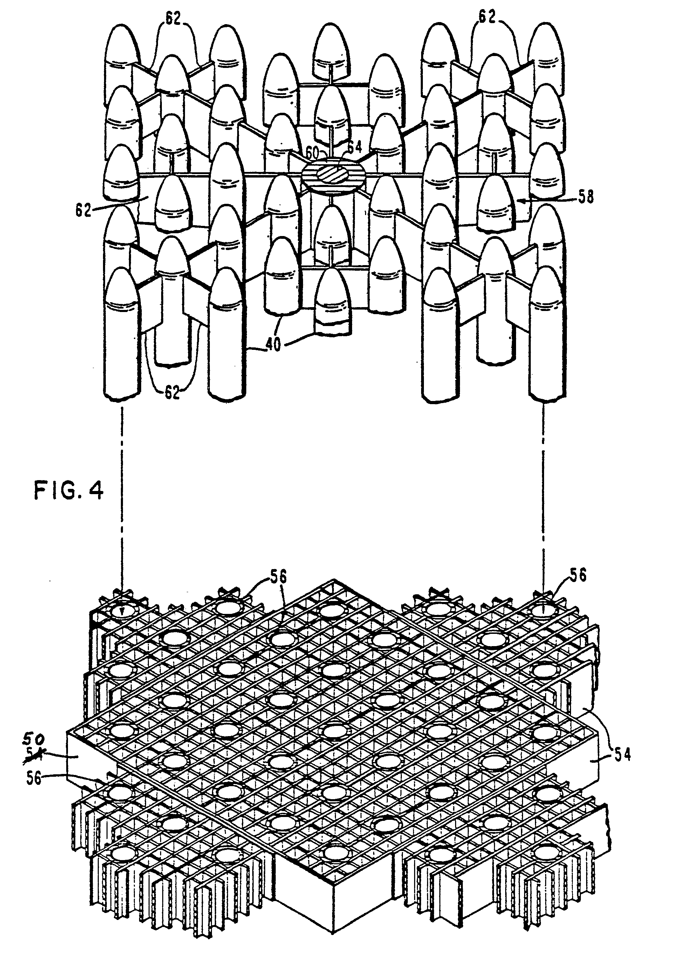

Grids 50 are positioned at various locations along the length of fuel assembly 32 and serve to space fuel elements 48 and guide tubes 56 at appropriate distances from each other and to allow the reactor coolant to circulate in heat transfer relationship with fuel elements 48. A more detailed description of a similar grid may be found in United States Patents US—A—3,379,617 and US—A—3,379,619. As can be seen in Figure 4, displacer rods 40 are elongated cylindrical substantially hollow rods which can be manufactured out of Zircaloy and may be of the type described in copending European Patent Application Number 81 110 143 (publication no. 54 237) entitled "Displacer Rod for Use in a Mechanical Spectral Shift Reactor". Displacer rods 40 may also contain $ZrO_2$ or $Al_2O_3$ pellets for weighting the rod and enhancing its lowerability. Displacer rods 40 are arranged so as to be in colinear alignment with guide tube 56 so that displacer rods 40 may be inserted in guide tubes 56 when it is desired. Displacer rods 40 are supported from a common attachment known as a spider 58. Spider 58 comprises a body 60 with struts 62 radially extending from body 60. Displacer rods 40 are individually attached to each strut 62 to form an array corresponding to the array of guide tubes 56 into which displacer rods may be inserted. Spider 58 is attached to drive shaft 64 which is connected to displacer rod drive mechanism 38. Activation of displacer rod drive mechanism 38 causes drive shaft 64 to be either lowered or raised thereby inserting or withdrawing displacer rods 40 from fuel assemblies 32 of core 34.

It is important to note that each spider 58 is arranged to be able to insert displacer rods 40 into more than one fuel assembly 32. For example, as shown in Figure 4, spider 58 is capable of inserting 25 displacer rods in center fuel assembly 32 and 4 displacer rods in each of the adjacent 4 fuel assemblies. In this manner displacer rods 40 can be moved in and out of fuel assemblies 32 without increasing the number of spiders and drive mechanisms.

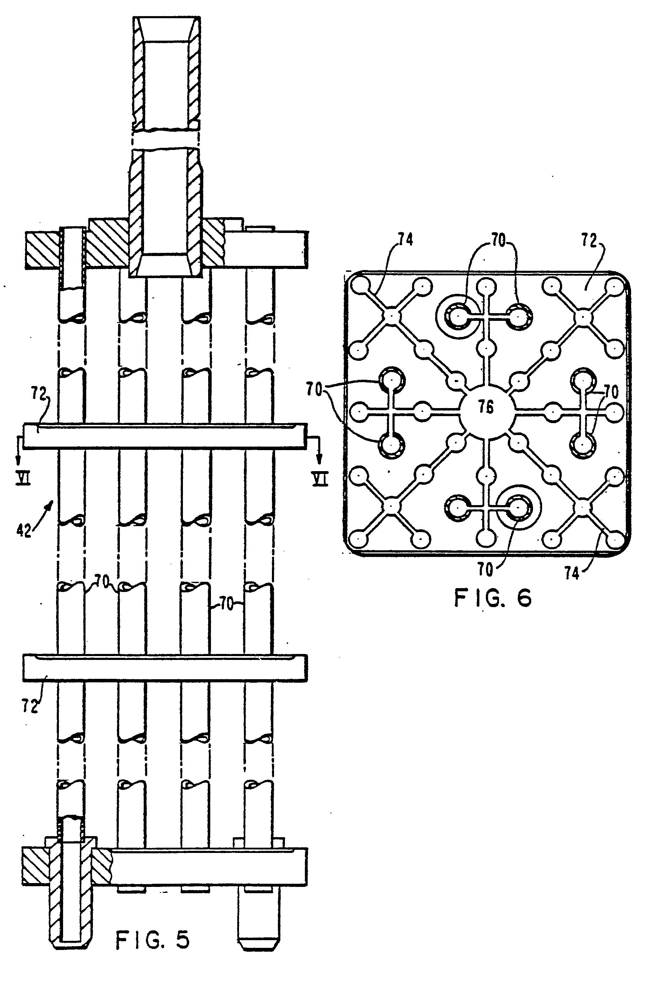

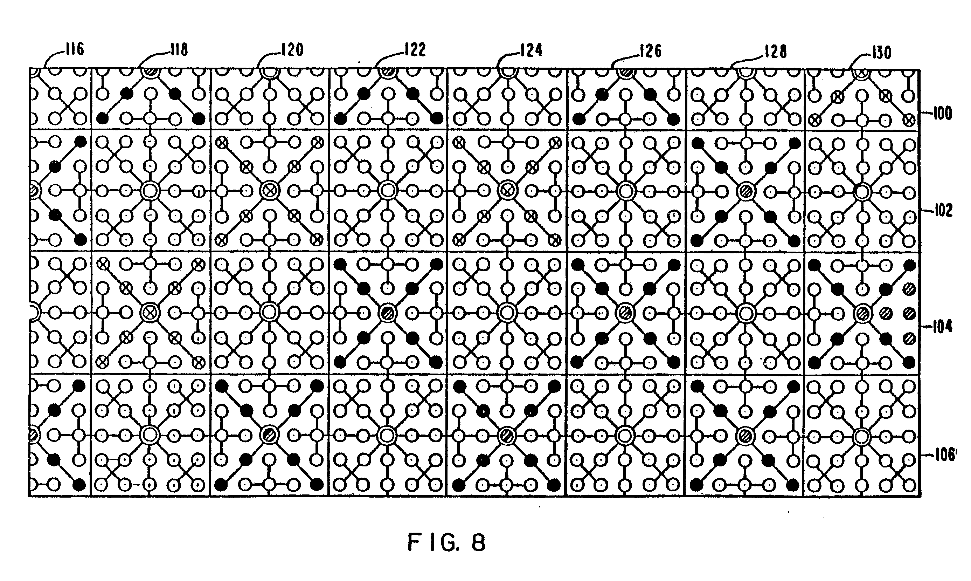

Referring now to Figures 5 and 6, displacer rod guide structures 42 comprise a plurality of split tube guides 70 which are designed to allow rods such as displacer rods or control rods to pass therethrough. Displacer rod guide structures 42 are located between calandria 44 and closure head 24 as shown in Figure 1 and are arranged to correspond to each displacer rod drive mechanism 38. A number of spacers 72 are located at various locations along split tube guides 70 and together with split tube guides 70 serve to guide displacer rods 40 through the upper section of reactor vessel 22. As can be seen in Figure 6, 8 split tube guides 70 may be provided for guiding displacer rods 40. The "split" in split tube guides 70 along with slots 74 in spacers 72 allow spider 58 to pass therethrough while maintaining alignment of the rods with guide tubes 56 in fuel assemblies 32. A center slot 76 is also provided for accommodating drive shaft 64 so that spider 58 may be moved therethrough.

Referring again to Figure 1, calandria 44 which comprises a multiplicity of tubes provides guidance for the rods such as displacer rods 40 through the calandria area. In general, the tubes in calandria 44 are not split tubes, as are split tube guides 70, so that spider 58 stops its descent when spider 58 nears the top of the tubes in calandria 44. When stopped at the top of calandria 44 all rods extend through the calandria tubes and are fully inserted in fuel assembly 32. While inserted in the calandria tubes, the rods are protected from the flow of reactor coolant thereby minimizing vibrations that would otherwise be induced by the high velocity of the reactor coolant in that area.

In the invention as described herein, there are provided at least three different types of control rods for insertion into guide tubes 56. For example, displacer rods, control rods, and gray rods may be arranged to be inserted in guide tubes 56. All of the rods are approximately the same size and configuration, but the materials of which they consist are different. Displacer rods 40 which may be either a hollow thick walled tube or may contain a low neutron absorbing material such as $ZrO_2$ or $Al_2O_3$ pellets are used to displace reactor coolant and thereby control reactor moderation. Control rods contain neutron absorbing material as is well understood in the art and serve to control core reactivity in a commonly understood fashion. Gray rods are similar to displacer rods 40 but are made of an intermediate neutron absorbing material such as stainless steel so that their reactivity worth per rod is greater than that of displacer rods 40.

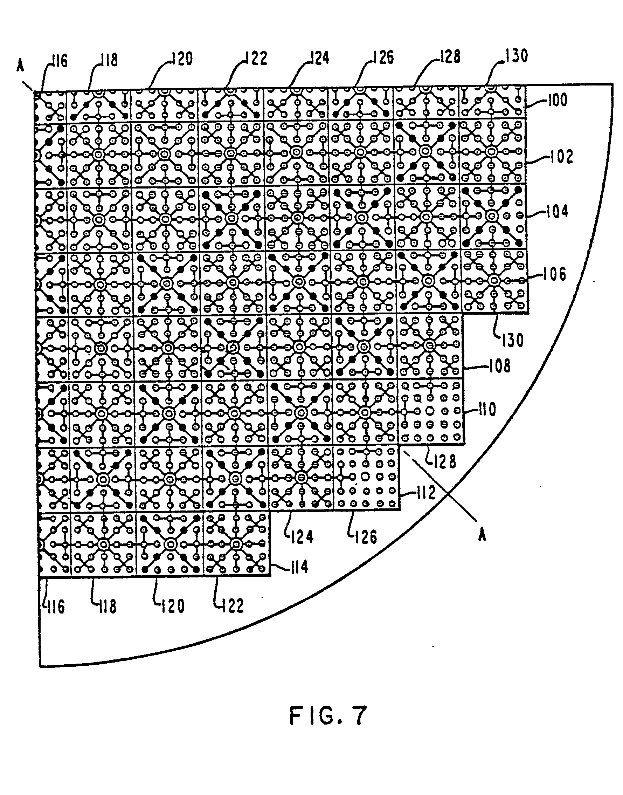

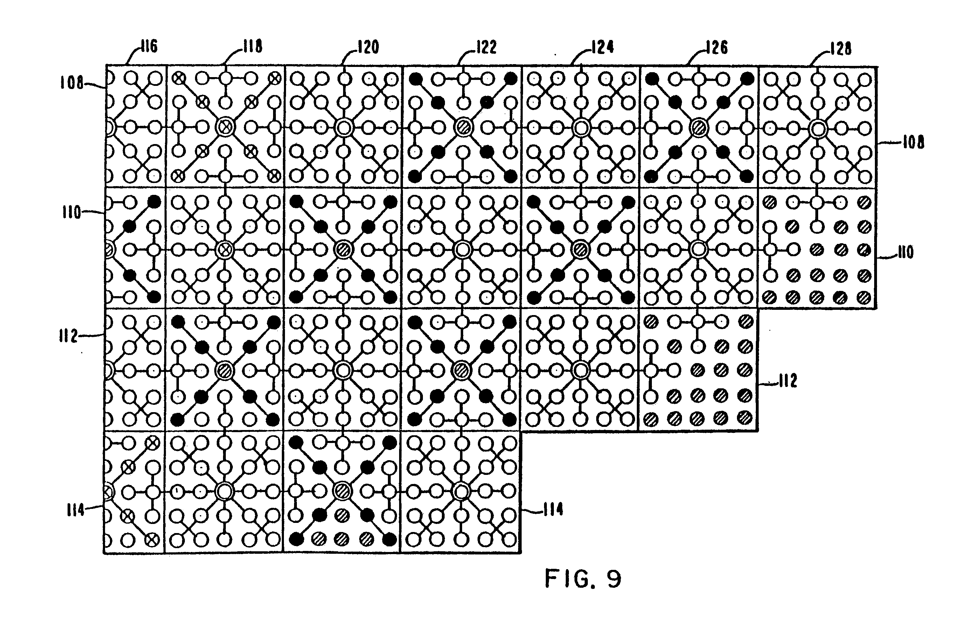

Referring now to Figures 7—11, the quarter core arrangement of fuel elements 48, displacer rods 40, control rods 80, gray rods 82, and unrodded locations 84 are shown. It is to be understood that the full reactor core configuration can be established by extrapolating the quarter core shown in Figure 7. Actually, the quarter core shown in Figure 7 is a mirror image of the eighth core taken along line A—A of Figure 7. However, the quarter core of Figure 7 is being shown for clarity.

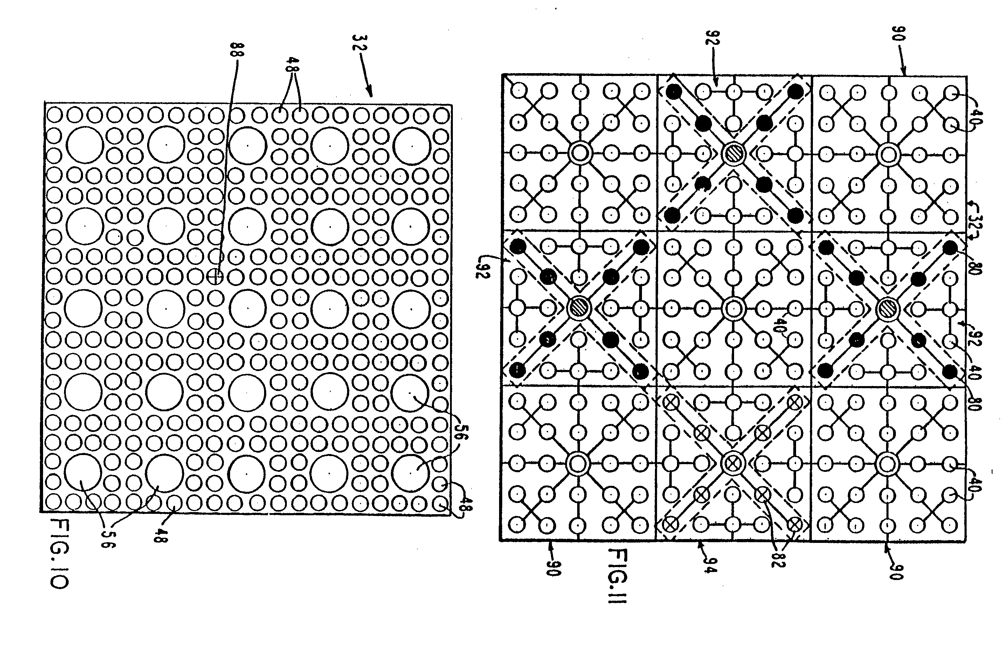

As can be seen in Figure 10, each fuel assembly 32 comprises an array of fuel elements 48 and an array of guide tubes 56. Generally, control rods 80 and gray rods 82 are used only in the diagonally arranged guide tubes 56 while displacer rods 40 are generally used in all guide tubes 56 of a given fuel assembly. In addition, an instrument tube 88 is provided near the center of each fuel assembly 32 for accommodating data instrumentation. While each fuel assembly 32 is essentially identical to the one shown in Figure 10, each fuel assembly 32 can produce a different function depending on whether guide tubes 56 are occupied by reactor coolant, displacer rods 40, control rods 80, or gray rods 82. Displacer rods 40 and gray rods 82 are generally chosen to be approximately the same size so as to displace approximately the same volume of water. However, gray rods 82 can be thick walled stainless steel cylindrical rods which gives each individual gray rod a higher reactivity worth than a single displacer rod. The wall thickness of the gray rods may be approximately 1.65 mm (0.065 inches). But since the gray rods are usually arranged in clusters of 9 as opposed to clusters of 41 displacer rods, each gray rod cluster has a smaller reactivity worth than a displacer rod clusters. Thus, by proper selection of materials and by proper selection of the number of rods, a balanced reactivity worth can be attained for the gray rods and displacer rods. In addition, since the reactivity worth of a gray rod cluster may be approximately 25% of a displacer rod cluster, various combinations of movements of gray rods clusters and displacer rod clusters can yield numerous reactivity worths throughout the core.

Referring now to Figure 11, a fuel assembly 32 in which no control rods 80 or gray rods 82 are used and in which only displacer rods 40 are used in guide tubes 56 is referred to generally as displacer assembly 90. A fuel assembly 32 in which both displacer rods 40 and control rods 80 are employed (but no gray rods) is referred to as control assembly 92. Similarly, a fuel assembly 32 in which both displacer rods 40 and gray rods 82 are used is called a gray assembly 94. It should be noted that in Figure 11 fuel elements 48 have been omitted for clarity and that those fuel assemblies are similar to those shown in Figure 10.

Still referring to Figure 11, each of the control rods 80 and gray rods 82 are attached to a spider (not shown) similar to spider 58 except that the spider for the control rods 80 or gray rods 82 generally only effects one fuel assembly. In this manner, all control rods 80 or gray rods 82 in a given fuel assembly can be raised or lowered by a single drive mechanism. Furthermore, since each displacer rod spider 58 can extend into the adjacent fuel assemblies (as illustrated in the center portion of Figure 11 and in Figure 4), the displacer rod spider's 58 movement effects the control on five fuel assemblies and reduces the number of displacer rod drive mechanisms needed. Of course, on the periphery of the quarter core (as shown in Figure 7) the particular spiders may move less than the usual number of rods because there are no adjacent fuel assemblies or there are unrodded locations 84.

Figures 7, 8 and 9 show a core arrangement wherein each row or partial row is numbered 100—114 and each column or partial column is numbered 116—130 and comprises:

Fuel assembly
(100, 116) quarter displacer assembly
(100, 118) half control assembly
(100, 120) half displacer assembly
(100, 122) half control assembly
(100, 124) half displacer assembly
(100, 126) half control assembly
(100, 128) half displacer assembly
(100, 130) half gray assembly

(102, 116) half control assembly
(102, 118) full displacer assembly
(102, 120) full gray assembly
(102, 122) full displacer assembly
(102, 124) full gray assembly
(102, 126) full displacer assembly
(102, 128) full control assembly
(102, 130) full displacer assembly

(104, 116) half displacer assembly
(104, 118) full gray assembly
(104, 120) full displacer asssembly
(104, 122) full control assembly
(104, 124) full displacer assembly
(104, 126) full control assembly
(104, 128) full displacer assembly
(104, 130) partial control-unrodded assembly

(106, 116) half control assembly
(106, 118) full displacer assembly
(106, 120) full control assembly
(106, 122) full displacer assembly
(106, 124) full control assembly
(106, 126) full displacer assembly
(106, 128) full control assembly
(106, 130) full displacer assembly

(108, 116) half displacer assembly
(108, 118) full gray assembly
(108, 120) full displacer assembly
(108, 122) full control assembly
(108, 124) full displacer assembly
(108, 126) full control assembly
(108, 128) full displacer assembly

(110, 116) half control assembly
(110, 118) full displacer assembly
(110, 120) full control assembly
(110, 122) full displacer assembly
(110, 124) full control assembly
(110, 126) full displacer assembly
(110, 128) partial displacer unrodded assembly

(112, 116) half displacer assembly
(112, 118) full control assembly
(112, 120) full displacer assembly
(112, 122) full control assembly
(112, 124) full displacer assembly
(112, 126) partial displacer unrodded assembly

(114, 116) half gray assembly
(114, 118) full displacer assembly
(114, 120) partial control unrodded assembly
(114, 122) full displacer assembly

As can be seen from the above description of the quarter core, the core configuration based on this concept can be illustrated generally as shown in Figure 11. Basically, the fuel assembly in the center of the full core as represented by fuel assembly (100, 116) in Figure 7 can be chosen to be either a control assembly 92 or preferably a displacer assembly 90. Once this is chosen, the four fuel assemblies immediately adjacent to the flat sides of the center fuel assembly are chosen to be the other type and the fuel assemblies on the diagonal are chosen to be the same type as the center assembly. This pattern is then continued in an alternating fashion. For example, the center fuel assembly (100, 116) in Figure 7 was chosen to be a displacer assembly 90 so that the fuel assemblies on its adjacent flat sides are chosen to be either control assemblies 92 or gray assemblies 94 while those on the diagonal are chosen to be displacer assemblies 90. This pattern is repeated in alternating fashion until the periphery of the core is reached where the end fuel assemblies may be chosen to be hybrid assemblies based on the nuclear physics of the particular core. Whether a particular assembly is chosen to be a control assembly 92 or a gray assembly 94 is determined by first selecting the number and location of control assemblies needed based on conventional core design. The remainder of the assemblies not chosen to be control assemblies 92 are then used as gray assemblies 94. Thus, substantially the entire core can be arranged on an alternating pattern of displacer assemblies and control or gray assemblies with practically all the fuel assemblies being served by at least one displacer rod spider 58 and with each displacer rod spider 58 serving generally 5 fuel assemblies. Moreover, each fuel assembly is served by at least one drive mechanism for either displacer rods, control rods or gray rods.

The illustrated core arrangement provides a means by which the neutron spectrum can be controlled in a "spectral shift" fashion by controlling the moderator volume in the core. This can be accomplished by displacing and replacing the water coolant in the core at appropriate times thereby changing the moderation of the core. In the present invention, displacer rods 40 and gray rods 82 can be used to effect this moderation change.

In operation, all displacer rods 40 and gray rods 82 are inserted in core 34 at the beginning of the core life. However, none of the control rods 80 need be inserted at that time. The insertion of displacer rods 40 and gray rod 82 is done by activating the appropriate drive mechanism such as displacer rod drive mechanism 38. When the drive mechanism is activated, displacer rods 40 and gray rods 82 fall into the appropriate guide tubes 56 in fuel assemblies 32. The displacer rods and gray rods will displace their volume of coolant (water) thus reducing the volume of moderator in core 34. The reduction of moderator hardens the neutron spectrum of the core and increases plutonium production. This hardening of the neutron spectrum is generally referred to as "spectral shift". The harder neutron spectrum reduces boron chemical shim requirements, results in a more negative moderator temperature coefficient, and reduces or eliminates turnable poison requirements. As the uranium fuel in the core is depleted over the life of the core, a certain number of displacer rods 40 and/or gray rods 82 may be withdrawn from the core by activating their respective drive mechanisms. The withdrawal of the rods allows more water-moderator into the core region and increases moderation of the core. This, in effect, introduces reactivity worth at a time when fuel depletion is causing a reactivity worth depletion. Thus, the reactivity of the core can be maintained at appropriate levels for a relatively long time. The withdrawal of the rods can continue at a selective rate (depending on core conditions) until, near the end of core life, all displacer rods 40 have been withdrawn from the core.

In addition to the use of displacer rods 40 and gray rods 82 for the purpose of "spectral shift", these rods can also be used for load follow purposes. For example, when the concentration of boron in the reactor coolant falls below approximately 100 ppm the capability of a boron bleed-and-feed operation to compensate for the xenon transient during load follow may not be practical. However, by withdrawing or inserting selected displacer rods 40 or gray rods 82, a proper reactivity change can be made to compensate for xenon transients. Moreover, such a maneuver can be performed to adjust overall power requirements or to adjust radial power distributions. Since gray rods 82 have a different reactivity worth than displacer rods 40 and since gray rods 82 and displacer rods 40 are located in different core locations, proper selection and movement of the rods can accomplish delicate reactor control.

Calculations of the reactivity worth of a 41-rod displacer rod cluster indicates that such a cluster may have a reactivity worth of approximately 75 pcm. That is, core reactivity is expected to increase by about 75 pcm when a single 41-rod displacer rod cluster is moved from fully inserted to fully withdrawn when fuel burnup is about 11,000 MWD/MTU. At the same time, the moderator temperature coefficient of reactivity is predicted to be about −70 pcm/°C. Hence, withdrawal of a single 41-rod displacer rod cluster, with no associated change in control rod position or power level, will result in a reactor coolant average temperature increase of about 1°C with the temperature change lagging behind displacer rod movement by about 10—20 seconds (one loop transit time). Since the coolant average temperature changes in response to displacer movement are small and occur slowly, coolant temperature change can be used to "cushion" the effect of displacer movement on overall core reactivity. That is, due to the negative moderator temperature coefficient, the reactor coolant temperature change will tend to offset a portion of the reactivity change caused by the displacer rod movement thus providing a smooth transition in core reactivity when a displacer rod cluster is moved. Since displacer rod cluster reactivity worth and the absolute value of the moderator temperature coefficient change in the same direction and at comparable fractional rates with changing boron concentration and hydrogen-to-uranium ratio in the core, the temperature change per unit displacer rod cluster movement is generally independent of core conditions throughout the latter part of the core life.

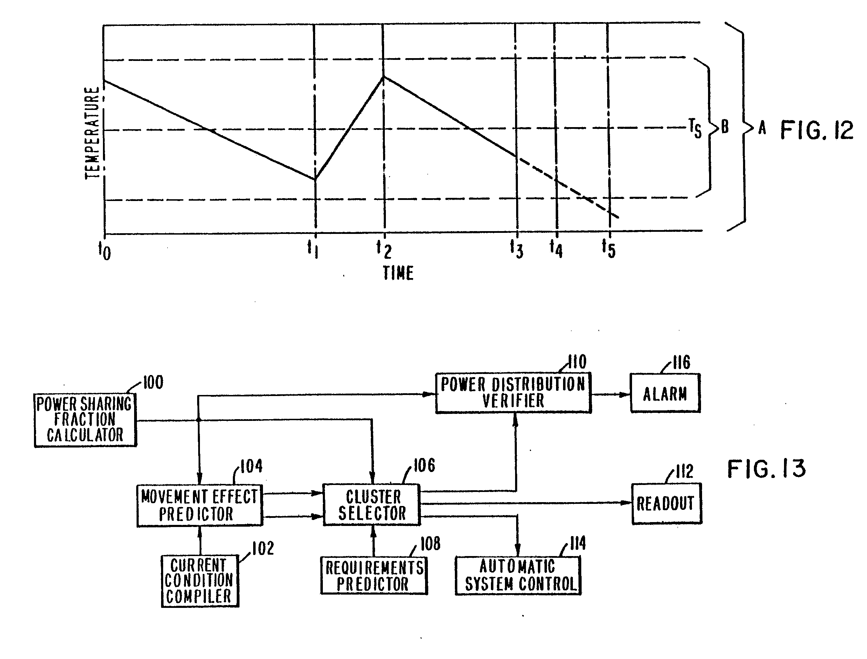

Referring to Figure 12, utilizing these concepts for reactor control two reactor coolant temperature bands can be selected for reactor operating purposes. These bands may be different from and wider than the conventional operating bands. One band, band A, is the wide band and is selected to be approximately 2.2°C (4°F) wide, 1.1°C (2°F) on either side of the reactor coolant average temperature set point, $T_s$. $T_s$ is chosen to be the reactor coolant average temperature at which it is desired to operate the reactor. As an alternative, the average cold leg temperature may be used. An administrative guidance limit or narrow band, band B, may be chosen to be approximately 1.65°C (3°F) wide, 0.8°C (1.5°F) on either side of set point temperature $T_s$. Band A is chosen so that if the reactor coolant temperature reaches this limit automatic systems are initiated to reverse the temperature drift. Band B is chosen as a working guide limit so that as the reactor coolant temperature approaches this limit either operator or automatic selection and initiation of displacer rod movement may begin to avoid reaching the band A limit. In this manner, as the reactor coolant temperature drifts downwardly such as during xenon accumulation as illustrated between $t_0$ and $t_1$, withdrawal of a particular displacer or gray rod cluster is initiated. Between $t_1$ and $t_2$ the rod cluster is withdrawn which takes approximately 15 minutes to achieve complete withdrawal. The withdrawal of a rod cluster allows additional water-moderator to enter the core which increases core reactivity and results in the reactor coolant temperature drifting upwardly. As the xenon continues to accumulate the coolant temperature begins to drop again as illustrated between $t_2$ and $t_3$. As $t_3$ is approached, it again becomes necessary to select and withdraw the next rod cluster, either a 41 rod displacer cluster or a 9 rod gray cluster depending on the reactivity addition needed. The time frame between $t_4$ and $t_5$ indicates the time frame in which the next rod cluster should begin to be withdrawn to avoid reaching band A's limit. In this manner reactor coolant temperature variations such as those due to xenon transients can be compensated for without adjusting the boron concentration in the coolant and while prolonging the core life.

In addition to determining when a particular cluster should be moved, it is also necessary to determine which cluster or group of clusters should be moved and whether they should be moved in or out of the core. In this regard it can be appreciated that since a displacer rod cluster effects a larger core area than does a gray rod cluster and since individual gray rods have a different reactivity worth than do individual displacer rods, a proper selection and movement of various clusters can effect core reactivity levels and radial power distribution.

Referring now to Figure 13, a power sharing fraction calculator 100 determines the fraction of the total core power that is attributed to each fuel assembly. This can be ascertained in conventional manner by having a sufficient number of in-core radiation detectors to determine local neutron flux or nuclear power level magnitudes. For example, about 60 fuel assemblies may be equipped with about 5 radiation detectors such as gamma detectors. The 5 radiation detectors can be axially spaced along the fuel assembly so that, in all, about 300 in core detectors can provide instantaneous reactivity levels for 60 core zones. These readings, together with calibration and weighting factors, can be fed to power sharing fraction calculator 100 for determining the power sharing fraction borne by each core zone. At the same time, current condition compiler 102 compiles other core conditions such as boron concentration, hydrogen-to-uranium fraction, and present cluster positions. This information together with the information from power sharing fraction calculator 100 is transmitted to displacer movement effect predictor 104 which determines the reactivity change and power sharing fraction change that would occur by moving each cluster it has been found that the reactivity change associated with a particular fuel assembly by moving the corresponding cluster is related to the present fuel assembly power density. The correlation can be expressed as follows:

$$\Delta R = m \times APD$$

where

$\Delta R$ = reactivity change of the fuel assembly by inserting or withdrawing the corresponding cluster (displacer rods or gray rods);

APD = fuel assembly power density before moving the cluster; and
m = straight line slope

It has also been determined that the slope, m, can be related to burnup as illustrated by the following data:

| Burnup | Slope, m |
| --- | --- |
| (MWD/MTU) | (pcm per cluster/ unit power density) |
| 1,000 | 5.4 |
| 6,000 | 32.8 |
| 11,000 | 60.0 |

(MWD/MTU=Megawatt Day per Metric Tons of Uranium, and pcm=percent milli)

yielding a relation of slope to burnup of:

$$m = 0.0054 \times BU$$

where

$$BU = burnup \text{ in } MWD/MTU.$$

Therefore,

$$\Delta R = 0.0054 \times BU \times APD$$

By using this relationship, movement effect predictor 104 can predict the reactivity change to be expected from moving the cluster corresponding to that fuel assembly. This information is then transmitted to cluster selector 106.

It has also been found that the post-withdrawal power density of a particular fuel assembly can be related as follows:

$$NPD = (1.17 + 0.000033 \times BU) \times OPD$$

where
NPD=new fuel assembly power density
OPD=old fuel assembly power density
BU=burnup in MWD/MTU

Thus the power density change in a particular fuel assembly can be found based on its power density prior to cluster movement. This information is then transmitted to cluster selector 106.

A requirements predictor 108 which may be chosen from those well known in the art is arranged to determine and transmit to cluster selector 106 the amount of reactivity increase or decrease that is anticipated to be needed. This can be based on data such as coolant average temperature, power level, band limits, and set point considerations. Power sharing fraction calculator also feeds the power sharing fraction for each fuel assembly to cluster selector 106.

Cluster selector 106 accepts the power sharing fraction for each fuel assembly prior to a cluster movement, the reactivity change to be expected if a cluster were moved, the present fuel assembly power density (OPD) for each fuel assembly, the predicted fuel assembly power density (NPD) for each fuel assembly, and the reactivity change required. From this, a new power sharing fraction for each fuel assembly can be determined. Based on this information and the current position of each cluster, cluster selector 106 can select the one or more groupings of cluster movements that will achieve the desired reactivity change without distorting the overall power sharing profile. In general, this search may include predicting the next reactivity change and the movement required thereby so as to prevent making a cluster movement that could hinder latter cluster movements. The selected cluster groupings can be transmitted directly to power distribution verifier 110, operator readout 112, and automatic system control 114. Power distribution verifier can check the predicted power sharing fractions to the old power sharing fractions and can trip alarm 116 if the predicted change is outside set limits. The operator can view operator readout 112 and select which of the selected cluster groupings to use or the selection can be made automatically by cluster selector 106 and transmitted to automatic system control 114 for implementation of the cluster movement. Thus, based on these criteria, various movements (insertions or withdrawals) of numerous combinations of available displacer rod or gray rod clusters can be evaluated and implemented for controlling a pressurized water reactor such as during load follow.

## Claims

1. A spectral shift controlled pressurized water nuclear reactor including a reactor vessel (22) having an inlet (26) and an outlet (28) for circulating a water coolant in heat transfer with a core (34) disposed therein, a plurality of fuel assemblies (32) disposed in said core for generating heat by nuclear fission, and a plurality of low neutron absorbing water displacer elements (40) arranged to be inserted into, or withdrawn from, said fuel assemblies (32), characterized in that medium neutron absorbing water displacer elements (82) having a greater reactivity worth than said low neutron absorbing water displacer elements (40) but having a reactivity worth less than control rods are arranged in said reactor to be inserted into, or withdrawn from, certain of said fuel assemblies (32), said low neutron absorbing displacer elements (40) and said medium neutron absorbing displacer elements (82) being adapted to displace water from said core (34) when said displacer elements (40, 82) are inserted into said fuel assemblies (32) thereby reducing the volume of water in said core (34).

2. A nuclear reactor according to claim 1, characterized in that said medium neutron absorbing water displacer elements (82) consist essentially of cylindrical metal rods.

3. A nuclear reactor according to claim 2, characterized in that said medium neutron absorbing water displacer elements (82) are thick-walled stainless steel substantially cylindrical metal rods.

4. A nuclear reactor according to claim 3, characterized in that said medium neutron absorbing water displacer elements (82) are arranged in groups of 9 rods to be simultaneously inserted into or withdrawn from, a single one of said fuel assemblies (32).

5. A nuclear reactor according to claim 4, characterized in that said medium neutron absorbing displacer elements (82) are arranged to be disposed in a diagonal array within said fuel assemblies.

6. A nuclear reactor according to claim 5, characterized in that said displacer elements (82) are arranged in a cruciform-like arrangement in said assemblies (32).

## Patentansprüche

1. Mit Spektralverschiebung gesteuerter Druckwasser-Kernreaktor mit einem Reaktorbehälter (22), der einen Einlaß (26) und einen Auslaß (28) zur Zirkulation eines mit dem darin befindlichen Reaktorkern (34) befindlichen Wasserkühlmittels aufweist, einer Vielzahl von in dem Reaktorkern angeordneten Brennelementen (32) zur Wärmeerzeugung durch Kernspaltung, und mit einer Vielzahl von schwach neutronenabsorbierenden Wasserverdrängerelementen (40), die in die Brennelemente (32) einschiebbar bzw. aus diesen herausziehbar sind, dadurch gekennzeichnet, daß in mittlerem Maße neutronenabsorbierende Wasserverdrängerelemente (82), die einen größeren Reaktivitätswert als die schwach neutronenabsorbierenden Wasserverdrängerelemente (40), jedoch einen kleineren Reaktivitätswert als Steuerstäbe haben, in dem Reaktor mit Bezug auf gewisse der Brennelemente (32) einschiebbar oder herausziehbar angeordnet sind, und daß die schwach neutronenabsorbierenden Verdrängerelemente (40) und die in mittlerem Maße neutronenabsorbierenden Verdrängerelemente (82), wenn diese Verdrängerelemente (40, 82) in die genannten Brennelemente (32) eingeschoben werden, Wasser aus dem Reaktorkern (34) verdrängen und dadurch das Wasservolumen im Reaktorkern (34) verringern.

2. Kernreaktor nach Anspruch 1, dadurch gekennzeichnet, daß die in mittlerem Maße neutronenabsorbierenden Wasserverdrängerelemente (82) im wesentlichen durch zylindrische Metallstäbe gebildet sind.

3. Kernreaktor nach Anspruch 2, dadurch gekennzeichnet, daß die in mittlerem Maße neutronenabsorbierenden Wasserverdrängerelemente (82) dickwandige, im wesentlichen zylindrische Metallstäbe aus rostfreiem Stahl sind.

4. Kernreaktor nach Anspruch 3, dadurch gekennzeichnet, daß die in mittlerem Maße neutronenabsorbierenden Wasserverdrängerelemente (82) in Gruppen zu je neun Stäben angeordnet sind, die gleichzeitig in ein einzelnes Brennelement (32) einschiebbar bzw. aus diesem herauszichbar sind.

5. Kernreaktor nach Anspruch 4, dadurch gekennzeichnet, daß die in mittlerem Maße neutronenabsorbierenden Wasserverdrängerelemente (82) in diagonalem Muster in den genannten Brennelementen angeordnet sind.

6. Kernreaktor nach Anspruch 5, dadurch gekennzeichnet, daß die genannten Verdrängerelemente (82) in einem kreuzförmigen Muster in den genannten Brennelementen (32) angeordnet sind.

**Revendications**

1. Réacteur nucléaire à eau sous pression et à dérive spectrale comprenant une cuve (22) de réacteur comportant une entrée (26) et une sortie (28) pour la circulation de l'eau de refroidissement en vue d'un échange de chaleur avec un coeur (34) placé dans la cuve, une pluralité d'assemblages combustibles (32) disposés dans ledit coeur pour engendrer de la chaleur par fission nucléaire, et une pluralité d'éléments (40) de déplacement d'eau absorbant les neutrons lents, disposés de manière à être introduits dans lesdits assemblages combustibles (32) ou à en être extraits, caractérisé par le fait que les éléments (82) de déplacement d'eau dont la valeur de réactivité est supérieure à celle desdits éléments (40) de déplacement d'eau absorbant les neutrons lents mais est inférieure à celle des barres de commande, sont disposés dans ledit réacteur de manière à être introduits dans certains desdits assemblages combustibles (32) ou à en être extraits, lesdits éléments de déplacement (40) absorbant les neutrons lents et lesdits éléments de déplacement (82) absorbant les neutrons intermédiaires étant adaptés pour expulser l'eau dudit coeur (34) quand lesdits éléments de déplacement (40, 82) sont introduits dans ledits assemblages combustibles (32) en réduisant ainsi le volume de l'eau dans ledit coeur (34).

2. Réacteur nucléaire suivant la revendication 1, caractérisé par le fait que lesdits éléments (82) de déplacement d'eau absorbant les neutrons intermédiaires consistent essentiellement en des barres métalliques cylindriques.

3. Réacteur nucléaire suivant la revendication 2, caractérisé par le fait que lesdits éléments (82) de déplacement d'eau absorbant les neutrons intermédiaires, sont des barres métalliques sensiblement cylindriques en acier inoxydable et à paroi épaisse.

4. Réacteur nucléaire suivant la revendication 3, caractérisé par le fait que lesdits éléments (82) de déplacement d'eau absorbant les neutrons intermédiaires sont disposés par groupe de neuf barres de manière à être introduits simultanément dans un seul desdits assemblages combustibles (32) ou à en être extraits.

5. Réacteur nucléaire suivant le revendication 4, caractérisé par le fait que lesdits éléments de déplacement (82) absorbant les neutrons intermédiaires sont disposés de manière à former un rang en diagonale dans lesdits assemblages combustibles.

6. Réacteur nucléaire suivant la revendication 5, caractérisé par le fait que lesdits éléments de déplacement (82) sont disposés en croix dans lesdits assemblages (32).

FIG. 1

FIG. 2

FIG. 3

0 054 789

FIG. 4

4

FIG. 5

FIG. 6

FIG. 7

FIG. 8

FIG. 9

0 054 789

FIG.II

FIG.IO

9

FIG. 12

FIG. 13

0054789